# EUROPÄISCHE PATENTANMELDUNG

(11) **EP 4 454 461 A1**
(43) Veröffentlichungstag der Anmeldung: **30.10.2024**
(21) Anmeldenummer: 24166730.2
(22) Anmeldetag: 27.03.2024
(51) Int. Cl.: A21B 3/04, A47J 27/04, F24C 15/00, F24C 15/32

(54) **SYSTEM ZUR FLÜSSIGKEITSZUFUHR IN EINEN GARRAUM EINES GARGERÄTS UND GARGERÄT**

(30) Priorität: 24.04.2023 DE 102023110367
(71) Anmelder: Miele & Cie. KG, 33332 Gütersloh (DE)
(72) Erfinder: Smigielski, Jens Peter, 59302 Oelde (DE); Lange, Ann-Christin, 48231 Warendorf (DE); Nold, Eugen, 49086 Osnabrück (DE)

(57) **Zusammenfassung**

Die Erfindung betrifft ein System (8) zur Flüssigkeitszufuhr in einen Garraum (6) eines Gargeräts (2) und/oder zur Flüssigkeitsabfuhr aus dem Garraum (6) des Gargeräts (2), umfassend ein Rohr (14) und eine Haltevorrichtung (16) zur Befestigung des Rohrs (14) an dem Gargerät (2), wobei das Rohr (14) mit der Haltevorrichtung (16) mittels eines an dem Rohr (14) und der Haltevorrichtung (14) gemeinsam ausgebildeten Gelenks (18) gelenkig verbunden ist, und wobei das Rohr (14) mittels des Gelenks (18) zwischen einer Nichtgebrauchslage des Rohrs (14) und einer Gebrauchslage des Rohrs (14) hin und her überführbar ist, dadurch gekennzeichnet, dass die Nichtgebrauchslage derart ausgebildet ist, dass das Rohr (14) in der Haltevorrichtung (16) im Wesentlichen versenkt ist und das System (8) eine rein mechanische Ausklappvorrichtung (20) aufweist, wobei die Ausklappvorrichtung (20) derart ausgebildet und angeordnet ist, dass das Rohr (14) mittels der Ausklappvorrichtung (20) von dessen Nichtgebrauchslage soweit in Richtung von dessen Gebrauchslage überführbar ist, dass das Rohr (14) manuell und ohne Hilfsmittel greifbar ist.

Ferner betrifft die Erfindung ein Gargerät (2).

## Beschreibung

Die Erfindung betrifft ein System zur Flüssigkeitszufuhr in einen Garraum eines Gargeräts und/oder zur Flüssigkeitsabfuhr aus dem Garraum des Gargeräts der im Oberbegriff des Patentanspruchs 1 genannten Art und ein Gargerät der im Oberbegriff des Patentanspruchs 9 genannten Art.

Derartige Systeme und Gargeräte sind aus dem Stand der Technik in einer Vielzahl von Ausführungsformen, beispielsweise aus den Druckschriften DE 10 2016 108 248 A1 und DE 10 2007 040 310 A1 und EP 2 518 413 B1 bereits vorbekannt. Die bekannten Systeme zur Flüssigkeitszufuhr in einen Garraum eines Gargeräts und/oder zur Flüssigkeitsabfuhr aus dem Garraum des Gargeräts umfassen ein Rohr und eine Haltevorrichtung zur Befestigung des Rohrs an dem Gargerät, wobei das Rohr mit der Haltevorrichtung mittels eines an dem Rohr und der Haltevorrichtung gemeinsam ausgebildeten Gelenks gelenkig verbunden ist, und wobei das Rohr mittels des Gelenks zwischen einer Nichtgebrauchslage des Rohrs und einer Gebrauchslage des Rohrs hin und her überführbar ist.

Der Erfindung stellt sich somit das Problem, ein System zur Flüssigkeitszufuhr in einen Garraum eines Gargeräts und/oder zur Flüssigkeitsabfuhr aus dem Garraum des Gargeräts sowie ein Gargerät mit einem derartigen System zu verbessern.

Erfindungsgemäß wird dieses Problem durch ein System mit den Merkmalen des Patentanspruchs 1 gelöst, das dadurch gekennzeichnet ist, dass die Nichtgebrauchslage derart ausgebildet ist, dass das Rohr in der Haltevorrichtung im Wesentlichen, also zumindest teilweise, versenkt ist und das System eine rein mechanische Ausklappvorrichtung aufweist, wobei die Ausklappvorrichtung derart ausgebildet und angeordnet ist, dass das Rohr mittels der Ausklappvorrichtung von dessen Nichtgebrauchslage soweit in Richtung von dessen Gebrauchslage überführbar ist, dass das Rohr manuell und ohne Hilfsmittel greifbar ist. Ferner wird dieses Problem durch ein Gargerät mit den Merkmalen des Patentanspruchs 9 gelöst. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein System zur Flüssigkeitszufuhr in einen Garraum eines Gargeräts und/oder zur Flüssigkeitsabfuhr aus dem Garraum des Gargeräts sowie ein Gargerät mit einem derartigen System verbessert sind. Aufgrund der erfindungsgemäßen Ausbildung des Systems und des Gargeräts ist das Rohr relativ zu der Haltevorrichtung und damit relativ zu dem Gargerät, an dem das Rohr mittels der Haltvorrichtung lösbar oder unlösbar befestigt ist, in einer vorher festgelegten Lage, nämlich der Nichtgebrauchslage und der Gebrauchslage, einerseits funktionssicher und andererseits platzsparend positionierbar. Handelt es sich bei der vorgenannten Lage um die Nichtgebrauchslage des Rohrs, in der das Rohr in der Haltevorrichtung im Wesentlichen versenkt ist, ist das Rohr sehr platzsparend an dem Gargerät, beispielsweise einem Frontrahmen des Gargeräts, halterbar. Entsprechend kann ein für eine Aufnahme der Haltevorrichtung erforderlicher Spalt in dem Gargerät, beispielsweise in dem vorgenannten Frontrahmen, sehr schmal ausgebildet sein, da das Rohr zwecks Überführung von dessen Nichtgebrauchslage in dessen Gebrauchslage in der Nichtgebrauchslage manuell nicht greifbar sein muss. Somit ist es zum Beispiel möglich, die Erfindung auch bei Gargeräten zu verwirklichen, bei denen lediglich ein Bauraum für eine technische Lösung wie vorgenannt vorhanden ist. Darüber hinaus ist es mittels der Erfindung möglich, ein System für ein Gargerät mit einem Rohr zur Flüssigkeitszufuhr in einen Garraum des Gargeräts und/oder zur Flüssigkeitsabfuhr aus dem Garraum des Gargeräts auf konstruktiv und fertigungstechnisch besonders einfache Art und Weise zu realisieren. Mittels der Erfindung ist es also möglich, das Rohr manuell in eine der beiden vorgenannten Lagen zu überführen, ohne, dass hierfür ein großer Bauraum für die Haltevorrichtung erforderlich wäre. Ferner ist dadurch der optische Gesamteindruck des Gargeräts verbessert, da das Rohr, beispielsweise in der oben genannten Nichtgebrauchslage des Rohrs, optisch gefällig an dem Gargerät, beispielsweise an dem Frontrahmen des Gargeräts, angeordnet werden kann.

Grundsätzlich ist das System nach Art, Funktionsweise, Dimensionierung, Material und Anordnung in weiten geeigneten Grenzen frei wählbar. Gleiches gilt für das Gargerät, das beispielsweise als ein Backofen, ein Dampfgarer oder ein Kombinationsgerät mit einer Mehrzahl von voneinander verschiedenen Beheizungsarten ausgebildet sein kann. Ferner kann das Gargerät als ein Haushaltsgerät oder als ein gewerbliches Gargerät, also ein Gargerät für den professionellen Einsatz, ausgebildet sein.

Eine vorteilhafte Weiterbildung des erfindungsgemäßen Systems sieht vor, dass die Ausklappvorrichtung zumindest teilweise, bevorzugt vollständig, an der Haltevorrichtung angeordnet ist. Auf diese Weise ist die Konstruktion und die Fertigung des erfindungsgemäßen Systems und damit des erfindungsgemäßen Gargeräts weiter vereinfacht. Beispielsweise wäre es denkbar, dass die Haltevorrichtung einschließlich des an der Haltevorrichtung gehaltenen Rohres von einem Zulieferer als Baugruppe eingekauft wird und anschließend mit dem restlichen System und dem restlichen Gargerät funktionsfähig verbunden wird. Ferner gestaltet sich dadurch auch eine etwaige Demontage dieser Baugruppe als für einen Fachmann oder für einen Endkunden des damit ausgestatteten Gargeräts als sehr einfach.

Eine weitere vorteilhafte Weiterbildung des erfindungsgemäßen Systems sieht vor, dass die Ausklappvorrichtung als eine Drück-Vorrichtung ausgebildet ist. Dabei wird auf eine Drückbewegung des Benutzers - also eine Bewegung des Benutzers vom Benutzer weg - das Rohr auf den Benutzer zu bewegt. Die Auslösende Bewegung des Benutzers und die Reakivbewegung des Rohres sind nicht identisch, insbesondere hinsichtlich der Richtung nicht identisch. Vorzugsweise sind die Bewegungen entgegengesetzt. Hierdurch ist die Bedienung für einen Benutzer des erfindungsgemäßen Systems und damit des erfindungsgemäßen Gargeräts wesentlich vereinfacht, so dass der Bedienkomfort gesteigert ist. Dies deshalb, weil der Benutzer an derartige Bedienungen von Gargeräten gewöhnt ist und sich eine derartige Bedienung für den Benutzer als intuitiv darstellt.

Das erfindungsgemäße System sieht vor, dass die Ausklappvorrichtung eine Betätigungstaste zur manuellen Betätigung und einen Betätigungshebel zur mechanischen Betätigung des Rohrs in Abhängigkeit der Betätigung der Betätigungstaste aufweist. Auf diese Weise ist die manuelle Bedienung der Ausklappvorrichtung wie auch die rein mechanische Bewegung des Rohres mittels der Ausklappvorrichtung auf konstruktiv und fertigungstechnisch sehr einfache und robuste Art realisierbar.

Eine vorteilhafte Weiterbildung der letztgenannten Ausführungsform des erfindungsgemäßen Systems sieht vor, dass der Betätigungshebel als eine um eine Drehachse drehgelenkig gelagerte Betätigungswippe ausgebildet ist. Hierdurch ist der Betätigungshebel und damit die rein mechanische Ausklappvorrichtung sehr platzsparend umsetzbar, so dass der Bedarf an Bauraum für das erfindungsgemäße System zusätzlich reduziert ist.

Eine vorteilhafte Weiterbildung des erfindungsgemäßen Systems nach Anspruch 4 oder 5 sieht vor, dass die Betätigungstaste mittels einer Rückstellfeder der Ausklappvorrichtung von einer Betätigungslage der Betätigungstaste automatisch in eine Nichtbetätigungslage der Betätigungstaste rücküberführbar ist, bevorzugt, dass die Rückstellfeder als eine Blattfeder ausgebildet ist, besonders bevorzugt, dass die Blattfeder auf einer Rückseite der Haltevorrichtung mit der Haltevorrichtung verschweißt ist. Auf diese Weise ist eine automatische Rückstellung der Betätigungstaste der Ausklappvorrichtung von deren Betätigungslage, in der die Betätigungstaste von dem Benutzer des erfindungsgemäßen Systems und damit des erfindungsgemäßen Gargeräts zwecks Überführung des Rohrs von dessen Nichtgebrauchslage in dessen Gebrauchslage betätigt worden ist, in deren Nichtbetätigungslage, in der die Betätigungstaste von dem Benutzer nicht betätigt wird, auf konstruktiv und fertigungstechnisch sehr einfache Art ermöglicht. Dies gilt besonders für die bevorzugte und insbesondere für die besonders bevorzugte Ausführungsform dieser Weiterbildung. Blattfedern lassen sich besonders platzsparend und damit bauraumsparend verwenden.

Eine vorteilhafte Weiterbildung des erfindungsgemäßen Systems nach einem der Ansprüche 4 bis 6 sieht vor, dass die Betätigungstaste in einer Nichtbetätigungslage der Betätigungstaste im Wesentlichen bündig zu einer einem Benutzer des Gargeräts zugewandten Vorderseite der Haltevorrichtung und/oder des Gargeräts angeordnet ist. Hierdurch ist der optische Gesamteindruck des erfindungsgemäßen Systems und damit des erfindungsgemäßen Gargeräts in der Nichtbetätigungslage der Betätigungstaste wesentlich verbessert.

Eine vorteilhafte Weiterbildung des erfindungsgemäßen Systems nach einem der Ansprüche 4 bis 7 sieht vor, dass eine Längsachse des Rohres in dessen Nichtgebrauchslage zu der Senkrechten einen Winkel von kleiner 3°, bevorzugt von 2,4°, und/oder in dessen Gebrauchslage zu der Senkrechten einen Winkel von größer 8°, bevorzugt von größer oder gleich 10°, aufweist. Auf diese Weise ist die Anordnung und Ausrichtung des Rohres in dessen Versenktsein in der Haltevorrichtung in dessen Nichtgebrauchslage und/oder in dessen Ausgeklapptsein aus der Haltevorrichtung in dessen Gebrauchslage optimiert. Dies gilt insbesondere für die jeweils bevorzugte Ausführungsform dieser Weiterbildung.

Wie oben bereits ausgeführt, ist das Gargerät in weiten geeigneten Grenzen frei wählbar.

Eine besonders vorteilhafte Weiterbildung des erfindungsgemäßen Gargeräts sieht vor, dass das System an einem eine Garraumöffnung des Garraums umgebenden Frontrahmen des Gargeräts angeordnet ist, bevorzugt, dass der Frontrahmen als ein mit einem Gehäuse des Gargeräts verbindbarer separater Frontrahmen ausgebildet ist. Hierdurch ist der Bedienkomfort für den Benutzer des erfindungsgemäßen Systems wesentlich gesteigert. Darüber hinaus weist die bevorzugte Ausführungsform dieser Weiterbildung den weiteren Vorteil auf, dass der Frontrahmen durch dessen Ausbildung als separater Frontrahmen konstruktiv und fertigungstechnisch in weiten geeigneten Grenzen frei wählbar ausführbar ist. Entsprechend kann der Frontrahmen auf spezielle Erfordernisse des jeweiligen Einzelfalls leicht angepasst werden und mit einem Rest des erfindungsgemäßen Gargeräts modulartig verbunden werden.

Ein Ausführungsbeispiel der Erfindung ist in den Zeichnungen rein schematisch dargestellt und wird nachfolgend näher beschrieben. Es zeigt
- Figur 1: ein Ausführungsbeispiel des erfindungsgemäßen Gargeräts mit dem erfindungsgemäßen System in einer Frontansicht, mit einer Garraumtür in deren Öffnungslage,
- Figur 2: das Ausführungsbeispiel in einer Detailansicht im Bereich der Ausklappvorrichtung, in einer teilweisen, geschnittenen Seitenansicht, mit dem Rohr in dessen Nichtgebrauchslage und der Betätigungstaste in deren Nichtbetätigungslage,
- Figur 3: das Ausführungsbeispiel in analoger Darstellung zur Fig. 2, mit dem Rohr in dessen Gebrauchslage und der Betätigungstaste in deren Betätigungslage und
- Figur 4: das Ausführungsbeispiel in analoger Darstellung zur Fig. 2, mit dem Rohr in dessen Gebrauchslage und der Betätigungstaste in deren Nichtbetätigungslage.

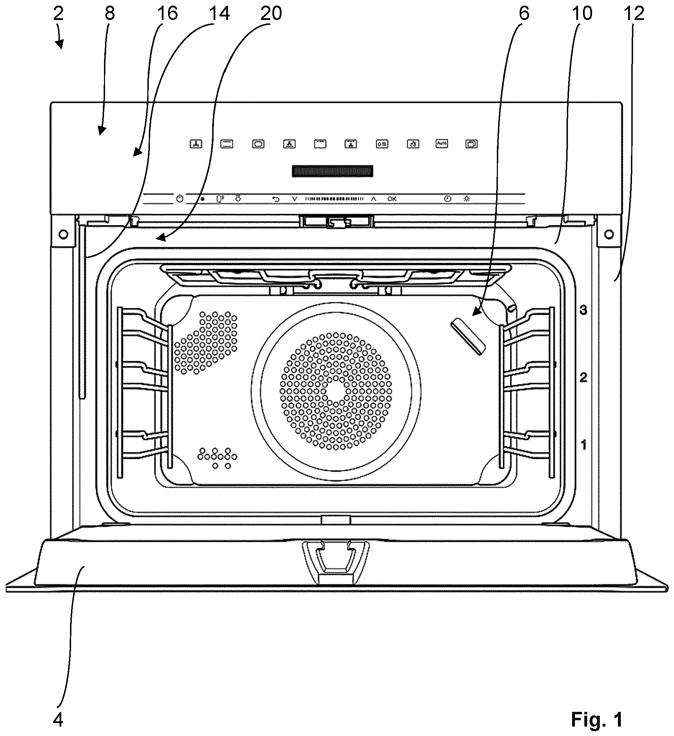

In den Fig. 1 bis 4 ist ein Ausführungsbeispiel des erfindungsgemäßen Gargeräts mit dem erfindungsgemäßen System rein exemplarisch dargestellt.

Das als Haushaltsgargerät ausgebildet Gargerät 2 weist einen von einer Garraumtür 4 verschließbaren Garraum 6 und, zwecks Durchführung einer Klimagarfunktion des Gargeräts 2, ein System 8 zur Flüssigkeitszufuhr in den und/oder zur Flüssigkeitsabfuhr aus dem Garraum 6 auf. Die Garraumtür 4 ist in der Fig. 1 in einer Öffnungslage der Garraumtür 4 dargestellt, so dass der Blick auf einen Frontrahmen 10 und den Garraum 6 ermöglicht ist.

Wie aus der Fig. 1 ersichtlich ist, ist das System 8 an dem eine Garraumöffnung des Garraums 6 umgebenden Frontrahmen 10 des Gargeräts 2 angeordnet, wobei der Frontrahmen 10 bei dem vorliegenden Ausführungsbeispiel als ein mit einem Gehäuse 12 des Gargeräts 2 verbindbarer separater Frontrahmen ausgebildet ist.

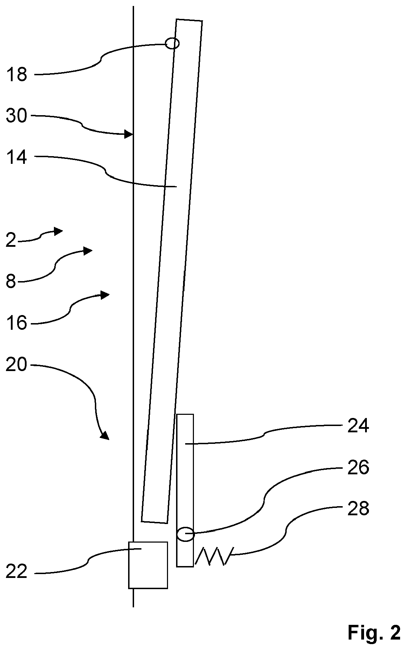

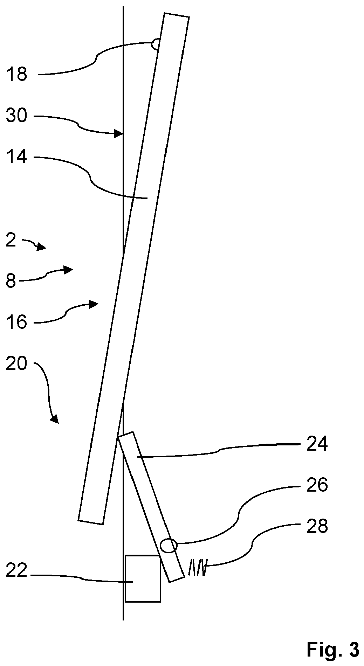

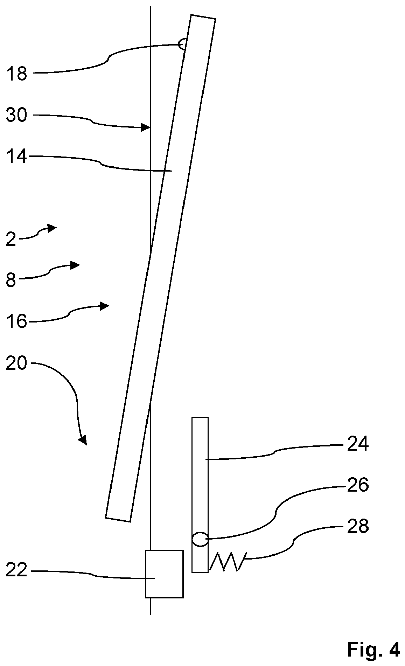

Das System 8 zur Flüssigkeitszufuhr in den Garraum 6 des Gargeräts 2 und/oder zur Flüssigkeitsabfuhr aus dem Garraum 6 des Gargeräts 2 umfasst ein Rohr 14 und eine Haltevorrichtung 16 zur Befestigung des Rohrs 14 an dem Gargerät 2, wobei das Rohr 14 mit der Haltevorrichtung 16 mittels eines an dem Rohr 14 und der Haltevorrichtung 16 gemeinsam ausgebildeten Gelenks 18 gelenkig verbunden ist, und wobei das Rohr 14 mittels des Gelenks 18 zwischen einer in der Fig. 1 und 2 dargestellten Nichtgebrauchslage des Rohrs 14 und einer in den Fig. 3 und 4 dargestellten Gebrauchslage des Rohrs 14 hin und her überführbar ist. Das Rohr 14 ist hier als ein im Wesentlichen steifes Rohr aus Edelstahl ausgebildet. Denkbar ist aber auch, dass das Rohr aus einem anderen Material hergestellt ist. Ferner ist es möglich, dass das Rohr als ein mehr oder weniger flexibles Rohr, zum Beispiel schlauchartig, ausgebildet sein kann.

Das vorgenannte Gelenk 18 ist in den Fig. 1 bis 4 nicht näher dargestellt. In den Fig. 2 bis 4 ist das Gelenk 18 lediglich symbolisch dargestellt. Zwar befindet sich das Rohr 14 bei dem vorliegenden Ausführungsbeispiel auf der in der Bildebene der Fig. 1 links dargestellten Seite des Frontrahmens 10 und damit des Gargeräts 2. Jedoch ist es auch denkbar, dass das Rohr in anderen Ausführungsformen der Erfindung auf der in der Bildebene der Fig. 1 rechts dargestellten Seite des Frontrahmens 10 und damit des Gargeräts 2 angeordnet ist. Selbstverständlich ist das Rohr grundsätzlich nicht nur, sofern vorhanden, an einem Frontrahmen des Gargeräts, sondern alternativ auch an anderer geeigneter und sinnvoller Stelle des Gargeräts anordenbar.

Erfindungsgemäß ist die Nichtgebrauchslage des Rohrs 14 derart ausgebildet, dass das Rohr 14 in der Haltevorrichtung 16 im Wesentlichen versenkt ist und das System 8 eine rein mechanische Ausklappvorrichtung 20 aufweist, wobei die Ausklappvorrichtung 20 derart ausgebildet und angeordnet ist, dass das Rohr 14 mittels der Ausklappvorrichtung 20 von dessen Nichtgebrauchslage soweit in Richtung von dessen Gebrauchslage überführbar ist, dass das Rohr 14 manuell und ohne Hilfsmittel greifbar ist. Demgegenüber ist das Rohr 14 in dessen Nichtgebrauchslage manuell und ohne Hilfsmittel nicht greifbar.

Die Ausklappvorrichtung 20 ist bei dem vorliegenden Ausführungsbeispiel zumindest teilweise, nämlich vollständig, an der Haltevorrichtung 16 angeordnet. Wie in der Beschreibungseinleitung bereits angedeutet, kann die Haltevorrichtung 16 einschließlich des an der Haltevorrichtung 16 gehaltenen Rohres 14 zum Beispiel von einem Zulieferer als Baugruppe eingekauft und anschließend mit dem restlichen System 8 und dem restlichen Gargerät 2 funktionsfähig verbunden werden. Ferner gestaltet sich dadurch auch eine etwaige Demontage dieser Baugruppe als für einen Fachmann oder für einen Endkunden des damit ausgestatteten Gargeräts 2 sehr einfach. Die Haltevorrichtung 16 ist in den Fig. 1 bis 4 nicht näher dargestellt.

Die Ausklappvorrichtung 20 ist hier nach Art einer Drück-Vorrichtung ausgebildet, wobei die Ausklappvorrichtung 20 hierfür eine Betätigungstaste 22 zur manuellen Betätigung und einen Betätigungshebel 24 zur mechanischen Betätigung des Rohrs 14 in Abhängigkeit der Betätigung der Betätigungstaste 22 aufweist. Siehe hierzu die Fig. 2 bis 4 in einer Zusammenschau.

Der Betätigungshebel 24 ist bei dem vorliegenden Ausführungsbeispiel als eine um eine Drehachse 26 drehgelenkig gelagerte Betätigungswippe ausgebildet, wobei ein freies Ende des als Betätigungswippe ausgebildeten Betätigungshebels 24, wie aus den Fig. 2 bis 4 ersichtlich, an dem Rohr 14 kraftübertragend anliegt, während ein anderes freies Ende des als Betätigungswippe ausgebildeten Betätigungshebels 24, wie aus den Fig. 2 bis 4 ersichtlich, bei einer Betätigung der Betätigungstaste 22 an der Betätigungstaste 22 kraftübertragend anliegt.

Ferner ist die Betätigungstaste 22 mittels einer Rückstellfeder 28 der Ausklappvorrichtung 20 von einer in der Fig. 3 dargestellten Betätigungslage der Betätigungstaste 22 automatisch in eine in den Fig. 2 und 4 dargestellten Nichtbetätigungslage der Betätigungstaste 22 rücküberführbar. Die Rückstellfeder 28 ist hier als eine Blattfeder ausgebildet, wobei die als Blattfeder ausgebildete Rückstellfeder 28 auf einer Rückseite der Haltevorrichtung 16 mit der Haltevorrichtung 16 verschweißt ist. Beispielsweise kann es sich bei der Rückstellfeder 28 um eine Blattfeder aus einem Federstahl handeln, die zum Beispiel mittels Kunststoffschweißens auf dem Fachmann an sich bekannte Art und Weise mit der als schweißbares Kunststoffteil ausgebildeten Haltevorrichtung 16 verschweißt ist. Selbstverständlich sind auch andere geeignete und sinnvolle Verbindungstechniken denkbar. Dies gilt auch für alle übrigen lösbaren oder unlösbaren Verbindungen, die zur Verwirklichung der Erfindung erforderlich sind. Auch sind andere Bauformen der Rückstellfeder denkbar. Rein exemplarisch sei hier lediglich auf Schraubenfedern oder Tellerfedern verwiesen. Auch das Material der Rückstellfeder ist in weiten geeigneten Grenzen frei wählbar. Beispielsweise wären auch Rückstellfedern, teilweise oder vollständig, aus Gummi oder dergleichen möglich.

Wie aus den Fig. 2 und 4 ersichtlich ist, ist die Betätigungstaste 22 in der Nichtbetätigungslage der Betätigungstaste 22 im Wesentlichen bündig zu einer einem nicht dargestellten Benutzer des Gargeräts 2 zugewandten Vorderseite 30 der Haltevorrichtung 16 und/oder des Gargeräts 2 angeordnet. Die Vorderseite 30 der Haltevorrichtung 16 wie auch des Gargeräts 2 ist in der jeweiligen Bildebene der Fig. 2 bis 4 jeweils links dargestellt.

Das Rohr 14 ist mittels des Gelenks 18 an der Haltevorrichtung 16 derart angeordnet, dass eine Längsachse des Rohres 14 in dessen Nichtgebrauchslage zu der Senkrechten einen Winkel von kleiner 3°, nämlich von 2,4°, und in dessen Gebrauchslage zu der Senkrechten einen Winkel von größer 8°, nämlich von 10°, aufweist. Siehe hierzu die Fig. 2 bis 4 in einer Zusammenschau.

Nachfolgend werden die Funktionsweisen des erfindungsgemäßen Gargeräts und des erfindungsgemäßen Systems gemäß dem vorliegenden Ausführungsbeispiel anhand der Fig. 1 bis 4 näher erläutert.

Aufgrund der oben genannten Ausführungen ist es möglich, die Haltevorrichtung 16 insgesamt schmaler als im Stand der Technik üblich auszuführen, so dass auch ein für die Befestigung der Haltevorrichtung 16 an dem Frontrahmen 10 erforderlicher Ausschnitt in dem Frontrahmen 10 schmaler als üblich ausfallen kann. Der vorgenannte Ausschnitt ist in den Fig. 1 bis 4 nicht dargestellt. Bei mittels Abkantungen hergestellten Frontrahmen, beispielsweise dem Frontrahmen 10, hat dies den Vorteil, dass Radienbereiche dieser Abkantungen im Frontrahmen 10 gleichmäßiger abgekantet werden können. Ebenfalls ermöglicht die Erfindung gemäß dem vorliegenden Ausführungsbeispiel, dass der Frontrahmen 10 bei der Fertigung des Gargeräts 2 nicht wie üblich um 180° gedreht werden muss, um den vorgenannten Ausschnitt herstellen zu können. Stattdessen kann der Ausschnitt im Frontrahmen 10 bereits vor dem Kanten im Zuschnitt des Frontrahmens 10 hergestellt werden. Somit kann der Arbeitsschritt des Wendens des Frontrahmens um 180° entfallen. Entsprechend gestaltet sich die Herstellung des erfindungsgemäßen Gargeräts gemäß dem vorliegenden Ausführungsbeispiel im Vergleich zum Stand der Technik wesentlich einfacher, zeitsparender und damit kostengünstiger.

Die Haltevorrichtung 16 mit dem daran angeordneten Rohr 14 und der daran angeordneten Ausklappvorrichtung 20 kann dann auf dem Fachmann bekannte Art und Weise in den vorgenannten Ausschnitt des Frontrahmens 10 eingesetzt und an dem Frontrahmen 10 befestigt werden.

Nach der Fertigstellung des Gargeräts 2, insbesondere nach der vorgenannten Montage des Systems 8 an dem Frontrahmen 10 des Gargeräts 2, kann der nicht dargestellte Benutzer des Gargeräts 2 das System 8 wie folgt bedienen:
Zunächst befindet sich das Rohr 14 in dessen Nichtgebrauchslage und die Betätigungstaste 22 in dessen Nichtbetätigungslage. Siehe hierzu die Fig. 2.

Zwecks manueller Überführung des Rohrs 14 von dessen Nichtgebrauchslage in dessen Gebrauchslage ist es erforderlich, dass der Benutzer das Rohr 14 manuell und ohne Hilfsmittel ergreifen kann. Dies ist jedoch in der Nichtgebrauchslage des Rohrs 14, in der das Rohr 14 in der Haltevorrichtung 16 im Wesentlichen versenkt ist, nicht möglich.

Der Benutzer betätigt die Betätigungstaste 22, in dem dieser die Betätigungstaste 22 mit einem Finger in der Bildebene der Fig. 2 von links nach rechts bis in die Betätigungslage der Betätigungstaste 22 gemäß der Fig. 3 bewegt. Hierbei gelangt die Betätigungstaste 22 derart in kraftübertragenden Kontakt mit dem als Betätigungswippe ausgebildeten Betätigungshebel 24 der Ausklappvorrichtung 20, dass die Betätigungstaste 22 das der Betätigungstaste 22 zugeordnete freie Ende des als Betätigungswippe ausgebildeten Betätigungshebels 24 in der jeweiligen Bildebene der Fig. 2 und 3, entgegen einer Federkraft der Rückstellfeder 28, ebenfalls von links nach rechts bewegt. Dabei wird die Rückstellfeder 28 gespannt. Gleichzeitig bewegt sich das dem Rohr 14 zugewandte freie Ende des als Betätigungswippe ausgebildeten Betätigungshebels 24 aufgrund des Gelenks 26 in der jeweiligen Bildebene der Fig. 2 und 3 von rechts nach links. Dabei gelangt dieses freie Ende des Betätigungshebels 24 derart kraftübertragend in Kontakt mit dem Rohr 14, dass das Rohr 14 mittels des Gelenks 18 von dessen in der Fig. 2 dargestellten Nichtgebrauchslage in dessen in der Fig. 3 dargestellte Gebrauchslage überführt wird. Siehe hierzu die Fig. 2 und 3 in einer Zusammenschau.

Sobald die Betätigungstaste 22 wieder entlastet ist, also der Benutzer nicht mehr länger auf die Betätigungstaste 22 in der vorgenannten Art und Weise drückt, überführt die Rückstellfeder 28 die Betätigungstaste 22 wieder automatisch von deren Betätigungslage in deren Nichtbetätigungslage. Gleichzeitig überführt die Rückstellfeder 28 den als Betätigungswippe ausgebildeten Betätigungshebel 24 wieder automatisch zurück in die aus der Fig. 2 ersichtliche Lage. Dabei entspannt sich die Rückstellfeder 28. Siehe hierzu die Fig. 4

Das Rohr 14 ist nun von dem Benutzer manuell und ohne Hilfsmittel ergreifbar, so dass der Benutzer das Rohr 14 beispielsweise in ein mit Wasser gefülltes Glas oder dergleichen manuell einführen kann. Das Glas mit dem Wasser ist nicht dargestellt. Denkbar ist auch, dass der Benutzer das Rohr 14 hierfür in der Bildebene der Fig. 4 noch weiter von rechts nach links bewegen kann.

Ist nun die von dem Benutzer gewünschte Flüssigkeitszufuhr in den Garraum 6 des Gargeräts 2 und/oder Flüssigkeitsabfuhr aus dem Garraum 6 des Gargeräts 2 mittels des Systems 8 beendet, so kann der Benutzer das Rohr 14 wieder von dessen in der Fig. 4 dargestellten Gebrauchslage in dessen in der Fig. 2 dargestellte Nichtgebrauchslage manuell und ohne Hilfsmittel zurücküberführen. Hierfür drückt der Benutzer das Rohr 14 mittels eines Fingers in der Bildebene der Fig. 4 von links nach rechts wieder zurück in die Haltevorrichtung 16.

Aufgrund der erfindungsgemäßen Ausbildung des Systems 8 und des Gargeräts 2 ist das Rohr 14 relativ zu der Haltevorrichtung 16 und damit relativ zu dem Gargerät 2, an dem das Rohr 14 mittels der Haltvorrichtung 16 lösbar oder unlösbar befestigt ist in der vorher festgelegten Lage, nämlich der Nichtgebrauchslage und der Gebrauchslage, einerseits funktionssicher und andererseits platzsparend positionierbar. Handelt es sich bei der vorgenannten Lage um die Nichtgebrauchslage des Rohrs 14, in der das Rohr 14 in der Haltevorrichtung 16 im Wesentlichen versenkt ist, ist das Rohr 14 sehr platzsparend an dem Gargerät 2, nämlich dem Frontrahmen 10 des Gargeräts 2, halterbar. Entsprechend kann der für die Aufnahme der Haltevorrichtung 16 erforderliche Spalt in dem Gargerät 2, nämlich der in dem vorgenannten Frontrahmen 10 angeordnete Ausschnitt, sehr schmal ausgebildet sein, da das Rohr 14 zwecks Überführung von dessen Nichtgebrauchslage in dessen Gebrauchslage in der Nichtgebrauchslage manuell nicht greifbar sein muss. Somit ist es zum Beispiel möglich, die Erfindung gemäß dem vorliegenden Ausführungsbeispiel auch bei Gargeräten zu verwirklichen, bei denen lediglich ein Bauraum für eine technische Lösung wie vorgenannt, also ein sehr begrenzter Bauraum, vorhanden ist.

Darüber hinaus ist es mittels der Erfindung gemäß dem vorliegenden Ausführungsbeispiel möglich, das System 8 für das Gargerät 2 mit dem Rohr 14 zur Flüssigkeitszufuhr in den Garraum 6 des Gargeräts 2 und/oder zur Flüssigkeitsabfuhr aus dem Garraum 6 des Gargeräts 2 auf konstruktiv und fertigungstechnisch besonders einfache Art und Weise zu realisieren. Mittels der Erfindung gemäß dem vorliegenden Ausführungsbeispiel ist es also möglich, das Rohr 14 manuell und ohne Hilfsmittel in eine der beiden vorgenannten Lagen zu überführen, ohne, dass hierfür ein großer Bauraum für die Haltevorrichtung 16 erforderlich wäre. Ferner ist dadurch der optische Gesamteindruck des Gargeräts 2 verbessert, da das Rohr 14, beispielsweise in der oben genannten Nichtgebrauchslage des Rohrs 14, optisch gefällig an dem Gargerät 2, nämlich an dem Frontrahmen 10 des Gargeräts 2, angeordnet werden kann.

Die Erfindung ist jedoch nicht auf das vorliegende Ausführungsbeispiel beschränkt. Siehe hierzu beispielsweise die diesbezüglichen Ausführungen in der Beschreibungseinleitung sowie die angedeuteten Optionen bei der Beschreibung des konkreten Ausführungsbeispiels. Somit ist die Erfindung für eine Vielzahl von Anwendungsfällen vorteilhaft einsetzbar und auf die Erfordernisse des jeweiligen Einzelfalls anpassbar.

## Patentansprüche

1. System (8) zur Flüssigkeitszufuhr in einen Garraum (6) eines Gargeräts (2) und/oder zur Flüssigkeitsabfuhr aus dem Garraum (6) des Gargeräts (2), umfassend
ein Rohr (14) und
eine Haltevorrichtung (16) zur Befestigung des Rohrs (14) an dem Gargerät (2),
wobei das Rohr (14) mit der Haltevorrichtung (16) mittels eines an dem Rohr (14) und der Haltevorrichtung (14) gemeinsam ausgebildeten Gelenks (18) gelenkig verbunden ist,
und wobei das Rohr (14) mittels des Gelenks (18) zwischen einer Nichtgebrauchslage des Rohrs (14) und einer Gebrauchslage des Rohrs (14) hin und her überführbar ist,
wobei die Nichtgebrauchslage derart ausgebildet ist, dass
das Rohr (14) in der Haltevorrichtung (16) zumindest teilweise versenkt ist
und das System (8) eine rein mechanische Ausklappvorrichtung (20) aufweist,
wobei die Ausklappvorrichtung (20) derart ausgebildet und angeordnet ist, dass
das Rohr (14) mittels der Ausklappvorrichtung (20) von dessen Nichtgebrauchslage soweit in Richtung von dessen Gebrauchslage überführbar ist, dass das Rohr (14) manuell und ohne Hilfsmittel greifbar ist,
**dadurch gekennzeichnet, dass**
die Ausklappvorrichtung (20) eine Betätigungstaste (22) zur manuellen Betätigung aufweist, und
die Ausklappvorrichtung (20) einen Betätigungshebel (24) zur mechanischen Betätigung des Rohrs (14) in Abhängigkeit der Betätigung der Betätigungstaste (22) aufweist.

2. System (8) nach Anspruch 1, wobei die Ausklappvorrichtung (20) zumindest teilweise an der Haltevorrichtung (16) angeordnet ist.

3. System (8) nach einem der vorhergehenden Ansprüche, wobei der Betätigungshebel (24) als eine um eine Drehachse (26) drehgelenkig gelagerte Betätigungswippe ausgebildet ist.

4. System (8) nach einem der vorhergehenden Ansprüche, wobei die Betätigungstaste (22) mittels einer Rückstellfeder (28) der Ausklappvorrichtung (20) von einer Betätigungslage der Betätigungstaste (22) automatisch in eine Nichtbetätigungslage der Betätigungstaste (22) rücküberführbar ist.

5. System (8) nach dem vorhergehenden Anspruch, wobei die Rückstellfeder (28) als eine Blattfeder ausgebildet ist.

6. System (8) nach dem vorhergehenden Anspruch, wobei die Blattfeder auf einer Rückseite der Haltevorrichtung (16) mit der Haltevorrichtung (16) verschweißt ist.

7. System (8) nach einem der vorhergehenden Ansprüche, wobei die Betätigungstaste (22) in einer Nichtbetätigungslage der Betätigungstaste (22) bündig zu einer einem Benutzer des Gargeräts (2) zugewandten Vorderseite (30) der Haltevorrichtung (16) und/oder des Gargeräts (2) angeordnet ist.

8. System (8) nach einem der vorhergehenden Ansprüche, wobei eine Längsachse des Rohres (14) in dessen Nichtgebrauchslage zu der Senkrechten einen Winkel von kleiner 3°und/oder in dessen Gebrauchslage zu der Senkrechten einen Winkel von größer 8° aufweist.

9. Gargerät (2) mit einem Garraum (6) und einem System (8) zur Flüssigkeitszufuhr in den und/oder zur Flüssigkeitsabfuhr aus dem Garraum (6), **dadurch gekennzeichnet, dass** das System (8) nach einem der vorhergehenden Ansprücheausgebildet ist.

10. Gargerät (2) nach dem vorhergehenden Anspruch, wobei das System (8) an einem eine Garraumöffnung des Garraums (6) umgebenden Frontrahmen (10) des Gargeräts (2) angeordnet ist.

11. Gargerät (2) nach dem vorhergehenden Anspruch, wobei der Frontrahmen (10) als ein mit einem Gehäuse (12) des Gargeräts (2) verbindbarer separater Frontrahmen (10) ausgebildet ist
